Europäisches Patentamt

European Patent Office

Office européen des brevets

(11) Publication number: **0 445 492 A1**

# EUROPEAN PATENT APPLICATION

(21) Application number: **90830419.9**

(22) Date of filing: **25.09.90**

(51) Int. Cl.5: **A61C 7/06**

(30) Priority: **06.03.90 IT 8492090**

(43) Date of publication of application:
**11.09.91 Bulletin 91/37**

(84) Designated Contracting States:
**AT BE CH DE DK ES FR GB LI NL SE**

(71) Applicant: **Sartori, Fausto**
**Via Zandonai, 4**
**I-36100 Vicenza(IT)**

(72) Inventor: **Sartori, Fausto**
**Via Zandonai, 4**
**I-36100 Vicenza(IT)**

(74) Representative: **Lanzoni, Luciano**
**c/o BUGNION S.p.A. Via G. Garibaldi n. 19**
**I-37121 Verona(IT)**

(54) Process and apparatus for carrying out modifications of form to the growth tissues in a human skeletal system.

(57) The inventive apparatus (1) substantially comprises a main support body (2) fastened to the patient's head, and supporting a corrector element (10) to which pulsating forces generated by vibrators (5) are applied, said corrector element (10) being designed to exert a pulling and pressing action onto a cartilage part or another growth tissue to be modified. The process consists in applying alternate forces which, based on the frequency to which they are applied, give rise to a selective correction action onto the growth tissues to be treated.

FIG.1

The present invention relates to a process and an apparatus for carrying out modifications of form to the growth tissues in a human skeletal system, said apparatus being of the type comprising at least a main support body anatomically adaptable to the human body area to which it is fastened, at least a corrector element acting upon the growth tissue to be modified, and connecting members operating between the main body and the corrector element.

The present apparatus and the process to apply it belong to the field of medical instruments for bone correction.

It it known that for carrying out the correction of the growth tissues in a skeletal system such as for example cartilages, apparatus capable of generating static forces are applied to the involved area of a human body in order to achieve the permanent modification of these tissues. These modifications are in some cases necessary for the purpose of eliminating motor, pathologic and traumatic defects.

The concerned static forces are applied by means of apparatus which, through corrector elements directly acting on the involved tissues, or on one part of the human body directly correlated to said tissues, succeed in achieving the permanent correction in time of the tissue to be modified.

In greater detail, referring particularly by way of example only to the skull orthopedics field, it has been found that continuous and localized loads caused by the application of static forces tend to give rise to an unnatural modification of the tissues and, at the worst, to the injury of said tissues. This is due to the fact that a constant localized load does not produce a normal energetic and metabolic exchange between the cells, which condition is necessary to accomplish a normal growth or modification of the cartilage tissue or of another kind of tissue to be treated.

Said apparatus comprise a headset-shaped structure which, fastened to tie patient's head, supports correction elements acting directly in contact with the palate or with the maxilla and mandible areas directly connected to the palate itself, in order to apply static forces adapted to modify said body parts.

The abovementioned static forces are obtained by preloading spring members which, depending upon their mounting position to the headset-shaped structure, perform pulling or pressing actions onto the treated areas.

It is an object of the present invention to eliminate the drawbacks of the known art, by providing an apparatus capable of generating forces having an alternate development which, when applied to the concerned parts of the human skeletal system, give rise to pulling or pressing actions onto said parts, thereby promoting the growth and correction thereof.

The foregoing and further objects are substantially achieved by an apparatus and a process for carrying out modifications of form to the growth tissues in a human skeletal system, said apparatus being characterized in that it comprises at least a vibrator acting upon said connecting members in order to transmit pulsating forces to the corrector element.

Further features and advantages of the invention will become more apparent from the detailed description of two preferred embodiments of an apparatus and a process for carrying out modifications of form to the growth tissues in a human skeletal system given hereinafter by way of non-limiting example with reference to the accompanying drawings, in which:

- Fig. 1 is a perspective view of the apparatus applied to a patient's head;
- Fig. 2 is a front view of the main support body;
- Fig. 3 is a side view of the main support body;
- Fig. 4 shows the corrector elements and connecting members applied to the lower maxilla so as to carry out a dental or palate correction;
- Fig. 5 is a front view of the corrector elements and connecting members;
- Fig. 6 is a schematic view of another embodiment of the apparatus of the invention applied to a lower limb;
- Fig. 7 is a schematic view of the main support body containing the vibrator members according to the embodiment shown in Fig. 6.

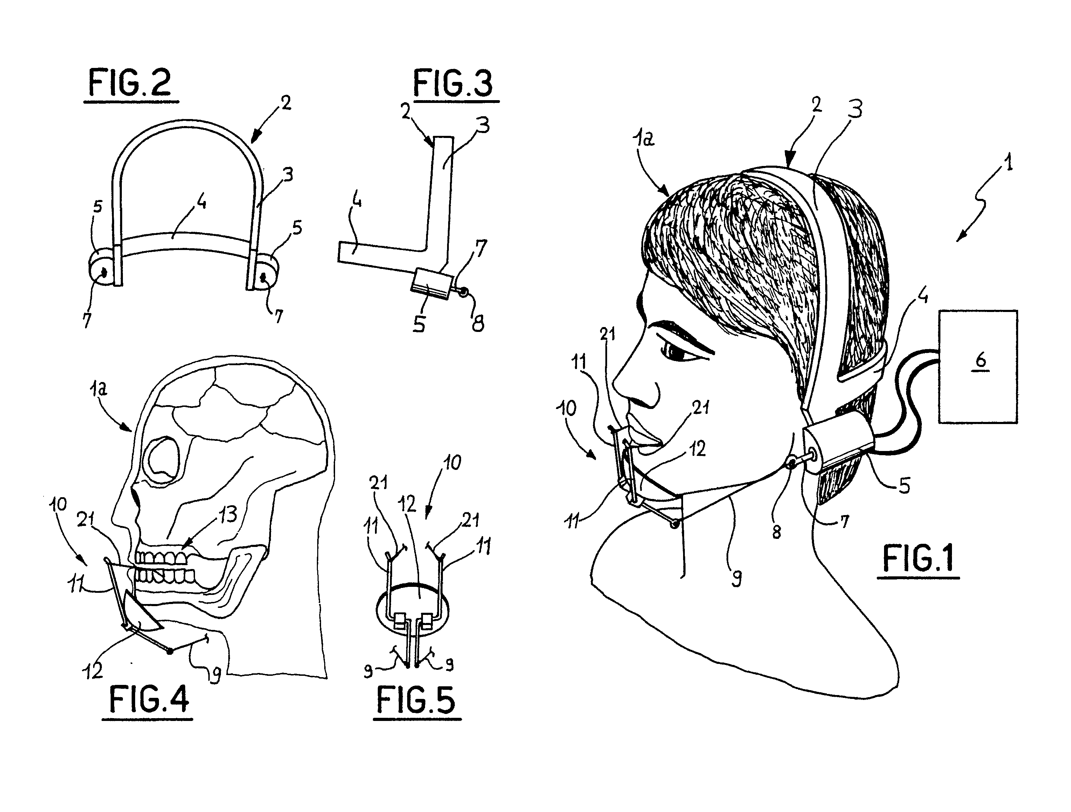

Referring to the drawings and particularly to Fig. 1, an apparatus carrying out modifications of form to the growth tissues in a human skeletal system has been generally identified by reference numeral 1. Apparatus 1 is designed to put into practice a process involving the use of at least a main support body anatomically adattable to the human body area to which it is fastened and at least a corrector element connected to the main support body and mounted to the human body area concerned with the growth tissue to be modified.

In accordance with the process of the invention pulsating forces are applied to said corrector element, said pulsating forces operating at the natural resonance frequency of the growth tissue to be modified.

To this end the apparatus 1 substantially comprises a main support body 2 anatomically adaptable to the body area to which it must be fixed and consisting of two U-shaped arches 3 and 4 joined to each other at the ends thereof. Mounted close to the junction areas of said ends are two vibrators preferably formed with electromagnets 5, each of which operates a slide element 7 provided with an anchoring ring 8. Advantageously the electromagnets 5 are controlled by a control box 6 regulating the frequency and intensity of the forces to be applied to the body part to be modified. Preferably the control box 6 controls the activation of the electromagnets 5 so as to produce pulsating forces at the natural resonance frequency of the growth tissue to be treated. In greater detail the electromagnets 5 are activated so that they produce respective alternate forces, preferably shifted a desired amout out of phase, which amount is variable depending upon the cases.

Under this situation the bone tissue to be modified will be submitted to alternate resultant forces having a cyclic helical development.

The control box 6 forms the subject of the Italian Patent Application No. 84,988-A/89 in the name of the same applicant to which please refer for further information.

Engaged to the anchoring rings 8 are connecting members 9 transmitting the forces generated by the electromagnet 5 to the corrector elements 10. In the embodiment shown in Figs. 1 to 5, the corrector elements 10 comprise two levers having their fulcrum on a chin-strap 12 acting in abutment against the patient's chin. Levers 11 have the respective lower ends engaged to the connecting members 9. The upper ends of levers 11 are instead connected to the dental arch 13, optionally with the aid of rubber bands 21 interposed therebetween, so that the forces transmitted by the connecting members 9 can be applied to said dental arch 13.

In this way the exerted pulling action aims at achieving a modification of form in the cartilage part supporting the dental arch 13.

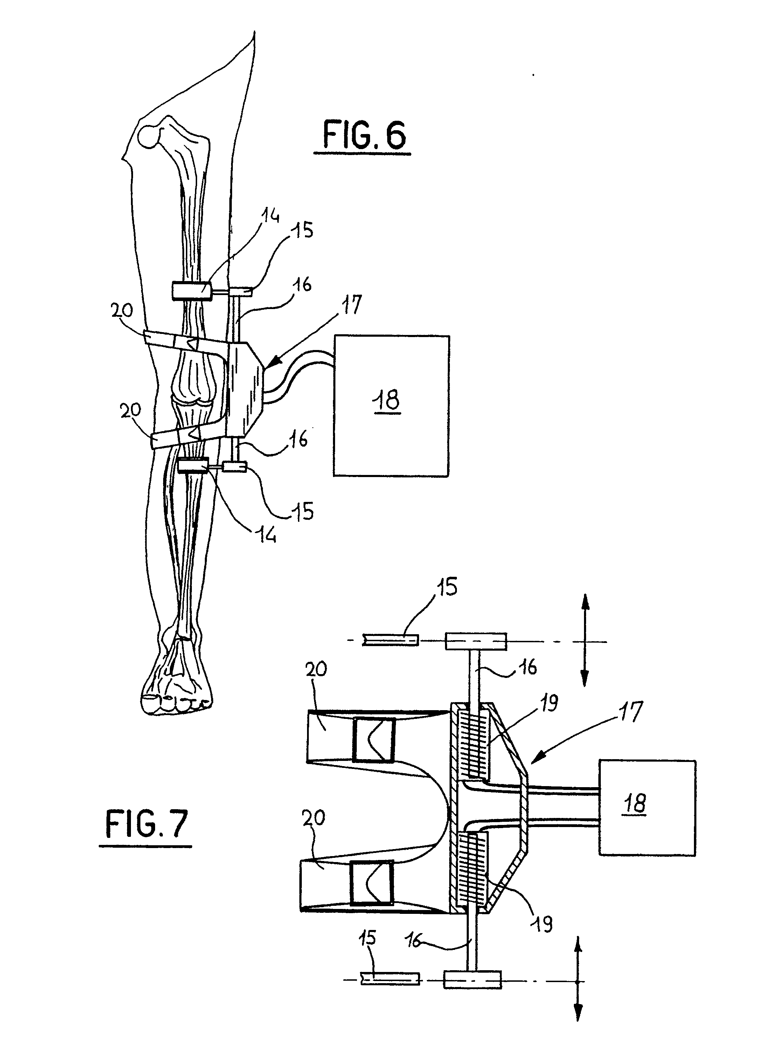

A second embodiment of the apparatus 1 is shown in Figs 6 and 7. In this case the apparatus is applied to a lower limb. More particularly the corrector elements 14 are fastened to the limb femur and tibia respectively and they project outwardly of the muscular mass by respective anchoring portions 15. Engaged to said anchoring portions 15 are connecting members 16 operated by respective electromagnets 19 mounted to the main body 17.

In the example shown the main support body 17 is applied to the patient's knee by means of strap elements 20. Said strap elements 20 are shown by way of example only and therefore they can be replaced by other equivalent fastening means.

The electromagnets 19 are interlocked to a control box 18 which, like the previously described control boa 6, regulates the frequency, intensity, and timing of the forces to be applied to the connecting members.

Operation of the two embodiments of the invention described above mainly as regards structure, is as follows.

In the embodiment shown in Fig. 1 the main support body 2 applied to a patient's head offers a steady base to the electromagnets 5. The electromagnets 5 being controlled by the control box 6 and fixed with respect to the patient's head 1a, can apply the desired alternate forces to the cartilage parts through the connecting members 9.

The corrector elements 10, as shown in Fig. 4, apply the pulling forces transmitted by the connecting members 9 to the dental arch 13 or part thereof. Therefore, by applying very weak forces to the masticatory apparatus, a force action is achieved which is adapted to modify and correct the cartilage parts or other growth tissues in the apparatus itself.

In the second embodiment shown in Figs. 6 and 7 in the same manner as previously described, alternate forces are applied to a lower limb in order to achieve the modification of the cartilage or other growth tissues which are present close to the limb articulation.

The invention attains the intended purposes.

Obviously many modifications and variations can be made, all of them falling within the scope of the invention idea characterizing it.

**Claims**

1. An apparatus (1) for carrying out modifications of form to the growth tissues in a human skeletal system, of the type comprising:
   - at least a main support body (2, 17) anatomically adaptable to the human body area to which it is fastened,
   - at least a corrector element (10, 14) acting upon the growth tissue to be modified;
   - connecting members (9, 16) operating between the main body ", 17) and the corrector element (10, 14), characterized in that it further comprises:
   - at least a vibrator (5, 19) acting upon said connecting members (9, 16) in order to transmit pulsating forces to the corrector element (10, 14).

2. An apparatus according to claim 1, characterized in that said vibrator (5, 19) operates between the main support body (2, 17) and the connecting members (9, 16).

3. An apparatus according to claim 1, characterized in that said vibrator (5, 19) comprises an electromagnet.

4. An apparatus according to claim 2, characterized in that said vibrator (5, 19) is integral with said main body (2, 17).

5. An apparatus according to claim 2, characterized in that said vibrator (5, 19) is controlled by a control box (6, 18) arranged so as to regulate the frequency and intensity of the pulsating force.

6. An apparatus according to claim 1, characterized in that it comprises at least two vibrators (5, 19) arranged so as to transmit alternate forces having a cyclic development and mutually out of phase to the growth tissue to be modified.

7. A process for carrying out modifications of form to the growth tissues in a human skeletal system involving the use of at least a main support body (2, 17) anatomically adaptable to the human body area to which it is fastened, and at least a corrector element (10, 14) connected to the main support body (2, 17) and disposed on the human body area concerned with the growth tissue to be modified, characterized in that it provides the application of pulsating forces to said corrector element (10, 14), said pulsating forces operating at the natural frequency resonance of the growth tissue to be modified.

8. A process according to claim 7, characterized in that at least two alternate forces having a cyclic development and being mutually out of phase are applied.

FIG.1

FIG.2

FIG.3

FIG.4

FIG.5

FIG.6

FIG.7

6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 244 688 (KURZ) <br> * Whole document * <br><br> – – – | 1-8 | A 61 C 7/06 |
| X | US-A-4 123 844 (KURZ) <br> * Whole document * <br><br> – – – – – | 1-4,7,8 | |

|  | TECHNICAL FIELDS SEARCHED (Int. Cl.5) |
|---|---|
|  | A 61 C <br> A 61 B <br> A 61 H |

The present search report has been drawn up for all claims

| Place of search | Date of completion of search | Examiner |
|---|---|---|
| The Hague | 04 April 91 | KOUSOURETAS I. |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons
----------------------------------------------------------------
& : member of the same patent family, corresponding document